# EUROPÄISCHE PATENTSCHRIFT

(11) **EP 0 307 822 B1**
(45) Veröffentlichungstag und Bekanntmachung des Hinweises auf die Patenterteilung: **14.04.1993**
(21) Anmeldenummer: 88114778.9
(22) Anmeldetag: 09.09.1988
(51) Int. Cl.: B60R 22/42

(54) **Gurtbandklemmvorrichtung für ein Sicherheitsgurtsystem mit Gurtaufroller**
Belt-clamping device for a seat belt system with a belt retractor
Dispositif de blocage de sangle pour une ceinture de sécurité à enrouleur

(30) Priorität: 16.09.1987 DE 3731143; 17.11.1987 DE 3739063; 25.03.1988 DE 3810246
(43) Veröffentlichungstag der Anmeldung: 22.03.1989
(73) Patentinhaber: Autoliv-Kolb GmbH & Co., D-85203 Dachau (DE)
(72) Erfinder: Knabel, Walter, Dr., D-8110 Murnau/Staffelsee (DE); Mayer, Josef, Dipl.-Ing., D-8044 Unterschleissheim (DE); Notar, Walter, Dipl.-Ing., D-8044 Unterschleissheim (DE); Lochbihler, Edmund, Dipl.-Ing., D-8000 München (DE)
(74) Vertreter: Gossel, Hans K., Dipl.-Ing.

(56) Entgegenhaltungen:
- GB-A- 2 113 978
- GB-A- 2 126 876
- US-A- 4 241 886

## Beschreibung

Die Erfindung betrifft eine Gurtbandklemmvorrichtung für ein Sicherheitsgurtsystem mit Gurtaufroller, das mit einer von mindestens einem Beschleunigungssensor gesteuerten Blockiervorrichtung für mit der Welle des Spulenkörpers des Gurtaufrollers verbundene Zahnkränze versehen ist, mit einem Klemmkeil, der an einer gehäusefesten Gleitfläche parallel zu einer gehäusefesten Gegendruckwange geführt ist und der mit der Gegendruckwange einen Durchtrittsspalt für das Gurtband begrenzt, und mit einem von der Blockiereinrichtung bewegbaren Stellglied, das den Klemmkeil in seine Klemmstellung schiebt.

Spricht bei einer aus der US-A-42 41 886 bekannten Gurtbandklemmvorrichtung dieser Art der fahrzeug- oder gurtsensitive Beschleunigungsfühler an, gelangt ein auf einer Trägheitsscheibe um einen Stift gelagerter Blockierhebel in Eingriff mit der Innenverzahnung einer Kupplungsscheibe, so daß ein Nocken, der fest mit der Welle des Spulenkörpers verbunden ist, über einen Blockierhebel bei einem Gurtauszug die Kupplungsscheibe zu drehen trachtet. Durch Drehen der Kupplungsscheibe werden Klauen ausgefahren, die blockierend in die Verzahnungen der Zahnkränze des Spulenkörpers greifen. Gleichzeitig wird bei einer Drehung der Kupplungsscheibe der aus einer Koppelstange bestehende Steuerhebel angehoben, der den in Schrägführungen geführten Klemmkeil in Anlage an das Gurtband bringt, so daß dieses zwischen dem Klemmkeil und der Gegendruckwange eingeklemmt ist. Bei dem bekannten Gurtbandklemmer ist die den Klemmkeil verschiebende Koppelstange mit ihrem an der Kupplungsscheibe angelenkten Ende gleichsam wie ein Pleuel auf einer Kreisbahn geführt, so daß sich dem Klemmkeil relativ zu der Geschwindigkeitdes augezogenen Gurtbandes keine Geschwindigkeit mit einer Charakteristik verleihen läßt, die in optimaler Weise auf die Geschwindigkeit des ausgezogenen Gurtbandes angepaßt ist.

Ein weiterer Nachteil der bekannten Vorrichtung besteht darin, daß der Klemmkeil um seine gelenkige Verbindung mit der Koppelstange schwenken kann, so daß er durch das Gurtband mit seiner Gleitfläche in Anlage an die schräge gehäusefeste Gleitfläche gehalten werden muß. Dies hat zur Folge, daß das Gurtband auch dann unter Reibung an der Klemmfläche des Klemmkeils vorbeigezogen wird, wenn der übliche Auszug des Gurtbandes ohne Blockierung des Gurtaufrollers erfolgt.

Aufgabe der Erfindung ist es daher, eine Gurtbandklemmvorrichtung der eingangs angegebenen Art zu schaffen, bei der der Klemmkeil verkantungsfrei mit seiner rückwärtigen Gleitfläche auf der gehäusefesten Gleitfläche geführt ist.

Erfindungsgemäß wird diese Aufgabe bei einer Gurtbandklemmvorrichtung der gattungsgemäßen Art dadurch gelöst, daß ein Ende des Stellgliedes drehbar mit dem Gehäuse und dessen anderes Ende gelenkig mit dem Klemmkeil verbunden ist, daß das Stellglied nach einer Blockierung der Zahnkränze bei weiterem Gurtauszug die Bewegung der Welle des Spulenkörpers in eine translatorische Bewegung des Klemmkeils umformt, daß zwischen dem Klemmkeil und einem gehäusefesten Anschlag ein Federelement vorgesehen ist, daß der Klemmkeil durch einen Arm eines zweiarmigen Hebels gebildet ist, dessen anderer Arm das Federlager darstellt und daß der federbelastete Arm den Klemmkeil in Anlage an die gehäusefeste Gleitfläche hält.

Bei der erfindungsgemäßen Gurtbandklemmvorrichtung ist der Klemmkeil mit seiner rückwärtigen Gleitfläche immer auf der schrägen gehäusefesten Gleitfläche geführt und auf dieser abgestützt, so daß ein ungewolltes Verklemmen und Verkanten des Klemmkeils ausgeschlossen ist. Weiterhin gewährleistet die erfindungsgemäße Führung des Klemmkeils, daß dieser ohne Aktivierung der Blockiereinrichtung nicht mit dem Gurtband in Berührung zu kommen braucht, weil er sich nicht zu seiner Führung auf dieses abzustützen braucht. Durch das Federelement wird der Klemmkeil mit seiner rückwärtigen Gleitfläche immer in Anlage an die gehäusefeste Gleitfläche gehalten, so daß eine gute und reibungsarme Führung des Klemmkeils gewährleistet ist.

Zweckmäßigerweise besteht das Stellglied aus zwei im Abstand voneinander angeordneten, mit dem Gehäuse gelenkig verbundenen Hebeln, die durch eine einen Anschlag bildende Querstrebe miteinander verbunden sind, wobei der Klemmkeil in seiner Ruhestellung mit der Unterseite auf diesem Anschlag aufliegt, während er sich mit seiner Gleitfläche auf der gehäusefesten Gleitfläche abstützt. Durch den Anschlag ist eine definierte Nullstellung des Klemmkeils gegeben, in welcher die Kraft des Federelements nicht auf Teile des Gurtaufrollers, wie beispielsweise die Sensorklinke und den Impulsheben, übertragen wird.

Die beiden durch die Querstrebe miteinander verbundenen Hebel befinden sich zweckmäßigerweise im Bereich der Enden der darunterliegenden Welle des Spulenkörpers, die auch zwischen den Hebeln liegen kann.

Zweckmäßigerweise hat die Kraftkomponente des Federelements die gleiche Richtung wie die gehäusefeste Gleitfläche.

Die Verbindung zwischen Klemmkeil und Stellglied kann durch Zapfen des Klemmkeils gebildet sein, die in Langlächer des Stellgliedes greifen, deren Längsmittellinien in einer Ebene liegen, die in der Ruhestellung der Vorrichtung mit der gehäusefesten Gleitfläche einen Winkel von etwa 45 Grad einschließt.

Zweckmäßigerweise liegt die gelenkige Verbindung zwischen dem Klemmkeil und dem Stellglied in einer Ebene, die sich aus der Verlängerung der gehäusefesten Gleitfläche ergibt. Diese Ausgestaltung gewährleistet eine gute Anlage der rückwärtigen Gleitfläche des Klemmkeils auf der gehäusefesten Gleitfläche auch im Ruhezustand der Vorrichtung.

Zweckmäßigerweise beträgt der Winkel zwischen der gehäusefesten Gleitfläche und der Gegendruckwang 26 bis 28 Grad.

Nach einer erfinderischen Weiterbildung der erfindungsgemäßen Vorrichtung, bei der die Welle des Spulenkörpers nach der Blockierung der Zahnkränze bei einem weiteren Gurtauszug eine Hubbewegung ausführt, ist erfindungsgemäß vorgesehen, daß das schwenkbare Stellglied an der Seite, die der Welle zugerichtet ist, eine Steuerkante aufweist, die beim Hub der Wickelwelle mit dieser in Eingriff kommt und die so ausgebildet ist, daß während des gesamten Einsteuervorgangs die Geschwindigkeit des Klemmkeils in Gurtbandauszugsrichtung relativ zur Abzugsgeschwindigkeit des Gurtbandes, das sich durch den Spalt zwischen Klemmkeil und Gegendruckwange bewegt, eine gewünschte Charakteristik erhält oder konstant ist. Dabei ist die Relativgeschwindigkeit zwischen der Klemmfläche des Klemmkeils und dem Gurtband so zu wählen, daß das Gurtband einem möglichst geringen Verschleiß ausgesetzt ist.

Die Einsteuergeschwindigkeit des Klemmkeils kann synchron zur Gurtbandabzugsgeschwindigkeit sein. Sie kann aber auch eine andere Charakteristik aufweisen, die bei guter Einsteuerung möglichst eine Schonung des Gurtbandes gewährleistet.

Eine günstige Geschwindigkeitscharakteristik kann die sein, daß sich der Klemmkeil bis zur Berührung der Zahnspitzen seiner Klemmfläche mit dem ausgezogenen Gurtband synchron bewegt und dann mit erhöhter Geschwindigkeit ganz eingesteuert wird.

Zweckmäßigerweise weist die den Anschlag bildende Querstrebe auf ihrer der Gegendruckwange zugewandten Seite eine Krümmung mit einem Radius auf, dessen Mittelpunkt auch der Mittelpunkt der gelenkigen Verbindung des Stellgliedes mit dem Gehäuse ist, so daß das über die Krümmung laufende Gurtband in jeder Stellung des Stellgliedes etwa in der gleichen Ebene geführt ist.

Nach einer weiteren erfinderischen Ausgestaltung der erfindungsgemäßen Vorrichtung, bei der die Welle des Gurtbandes durch eine Blockierung der Zahnkränze mit einem Steuerkörper oder einer Steuerscheibe gekoppelt wird und sich bei weiterem Gurtauszug zusammen mit dem Steuerkörper oder der Steuerscheibe weiterdreht, ist vorgesehen, daß das Stellglied mit einer Steuerkante versehen ist, die so ausgebildet werden kann, daß sich ein auf der Steuerkante abstützender Betätigungsstift, der an dem Steuerkörper oder der Steuerscheibe der Blockiervorrichtung befestigt ist, den Klemmkeil bei der Einsteuerbewegung der Welle mit relativ zur Gurtbandgeschwindigkeit konstanter oder gewünschter veränderter Geschwindigkeit in seine Klemmstellung schiebt. Dabei läßt sich bei gewählter Länge des beispielsweise aus einem Hebel bestehenden Steuergliedes die Steuerkante so ausbilden, daß bei der Bewegung des Steuerkörpers oder der Steuerscheibe im Klemmkeil eine auf die Auszugsgeschwindigkeit des Gurtes abgestimmte Relativgeschwindigkeit in Gurtauszugrichtung erteilt wird, die Haltestücken 26,27 anliegen. Mit den Haltestücken 26,27 sind Federstahlbänder 28 verschraubt, deren freien sich bis in den Bereich der Schweißleisten erstreckenden Teile die Randbereiche der Teflonbänder überdecken und diese gegen die Schweißleisten bzw. deren Halteteile 26,27 andrücken.

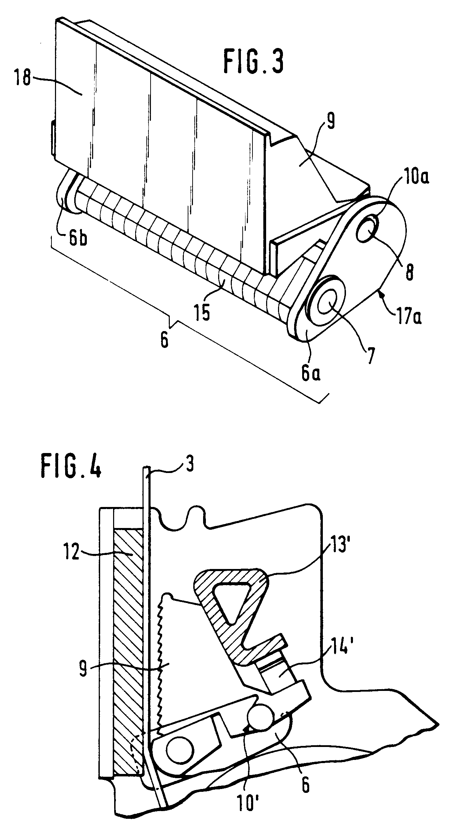

Die Teflonbänder 25 sind auf die Rollen 30,31 aufgewickelt. Diese Rollen sind auf Achsen 34 gelagert, die beidseits der Schmalseiten der Schweißleisten auf gabelförmig ausgebildeten Tragstücken 32,33 quer zu diesen an den Schweißbacken gehaltert sind. Eine Lagerung der Achawn 34 sowie die Ausbildung der Tragstücke 32 ist aus Fig.4 ersichtlich. Mit der unteren Schweißbacke 21 sind gabelförmig Träger 32,33 auf nicht dargestellter Weise verschraubt. Die Achse 34 ist durch Tellerfedern 35 vorgespannt, so daß sich das Teflonband 25 mit einstellbarer Vorspannung abziehen läßt. Die Schweißbänder 24 sind endseitig in um Achsen 39 schwenkbare Klemmstücke 24a eingespannt, wobei Federn 27a die Klemmstücke 24a zu verschwenken trachten und somit die Schweißbänder gespannt werden.

Das von den Rollen abgezogene oder auf diese auflaufende Teflonband 25 ist über Umlenkstangen 37,38 geleitet, die einen einwandfreien Ablauf und Auflauf sowie eine einwandfreie Zuführung des Teflonbandes zu den Schweißleisten gewährleisten.

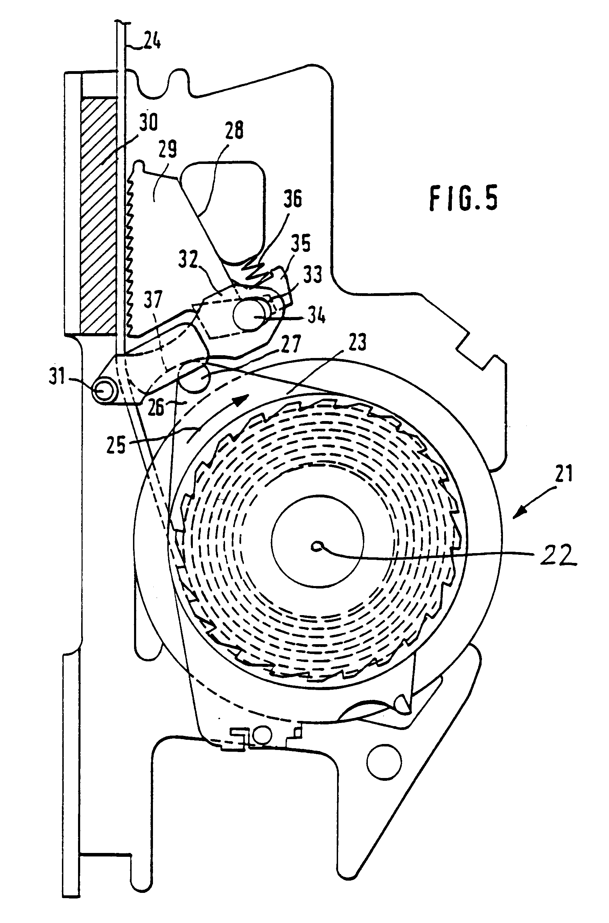

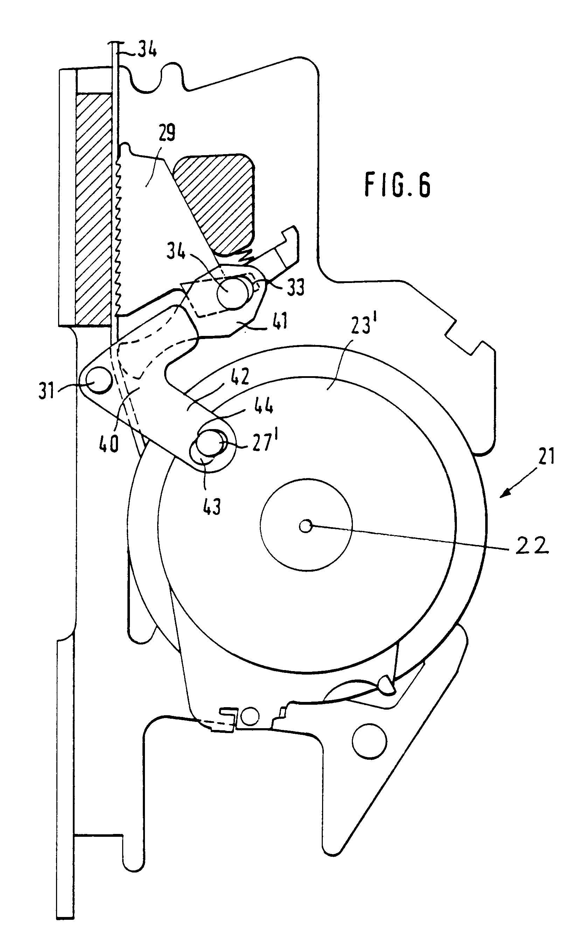

Anhand der Fig.5 und 6 ist schematisch ein von der Schweißbackenbewegung abgeleiteter Antrieb der aufrollenden Rolle dargestellt, der einen taktweisen Transport des Teflonbandes entsprechend dessen Verbrauch über die Schweißleisten gewährleistet.

Das unverbrauchte Teflonband ist auf der Rolle 40 gespeichert, die auf einer Achse oder einer Welle angeordnet ist, die zwischen mit dem zugehörigen Schweißbacken verbundenen Trägern gewickelt ist. Denn bei Abwicklung etwa der letzten Viertelwindung erfährt das Gurtband zu seiner Befestigungsstelle an der Welle hin eine Verlagerung, die über die verlängerte Gurtbandführung dem Stellglied eine zusätzliche Steuerbewegung erteilt, die den Klemmkeil nach Abzug des Gurtbandes von der Welle sicher einsteuern läßt.

Auf den Betätigungsstift können bei der Aktivierung des Klemmkeils hohe Kräfte wirken, so daß dieser, um ein Abscheren zu vermeiden, stabil ausgebildet sein muß. Große auf den Bestätigungsstift wirkende Kräfte können auch auf die Klinke des fahrzeugsensitiven Sensors und des gurtbandsensitiven Sensors wirken, die im Falle der Blockierung die Welle des Spulenkörpers mit der Steuerscheibe verbinden. Eine stabilere Ausgestaltung dieser Klinken würde jedoch eine Erhöhung der Trägheit des Sensors bedeuten.

Eine weitere Aufgabe der Erfindung ist es daher, die auf den Betätigungsstift wirkenden Kräfte zu verringern, um eine sichere Einsteuerung zu gewährleisten.

Erfindungsgemäß wird diese weitere Aufgabe dadurch gelöst, daß das Stellglied nach einer Blockierung der Zahnkränze bei weiterem Gurtauszug form- und/oder kraftschlüssig mit der Welle des Spulenkörpers verbunden wird.

Zweckmäßigerweise ist das Stellglied als Winkelhebel ausgebildet und im Bereich zwischen seinen Armen gehäusefest gelagert, wobei ein Arm an den Klemmkeil angelenkt ist und der andere Arm mit einer Verzahnung versehen ist, die bei der Einsteuerbewegung die Verzahnung eines wellenfesten Zahnkranzes greift. Auf diese Weise wird der Betätigungsstift nur am Anfang des Einsteuervorgangs mit verhältnismäßig geringen Kräften belastet, während die Hauptlast über die Wellenverzahnung und die Verzahnung des Steuerhebels aufgenommen wird, sobald diese beiden Verzahnungen ineinander greifen.

Nach einer weiteren besonders vorteilhaften Ausgestaltung der Erfindung ist ein Vorsteuerhebel vorgesehen, der bei der Einsteuerbewegung in die Verzahnung des wellenfesten Zahnkranzes eingreift und erst dann in Wirkkontakt mit dem Stellglied kommt. Wird von einem der Sensoren eine Blockierung eingeleitet, drückt der Betätigungsstift den Vorsteuerhebel mit seiner Verzahnung praktisch lastfrei in die Verzahnung des Wellenflansches. Sobald der Vorsteuerhebel eingerückt ist, liegt er so am Steuerhebel an, daß dieser bei einer weiteren Bewegung mitbewegt wird. Alle Kräfte werden somit von der Wellenverzahnung aufgenommen.

Zweckmäßigerweise sind der Vorsteuerhebel und das Stellglied so miteinander verbunden, daß sie durch Materialdeformation relativ zueinander beweglich sind. Der Vorsteuerhebel und das Stellglied können einstückig ausgebildet sein und vorzugsweise aus Kunststoff bestehen.

Ausführungsbeispiele der Erfindung werden nachstehend anhand der Zeichnung näher erläutert. In dieser zeigt
- Fig. 1: einen Längsschnitt durch eine erste Ausführungsform der erfindungsgemäßen Gurtbandklemmvorrichtung in Ruhestellung,
- Fig. 2: die Gurtbandklemmvorrichtung nach Fig. 1 in einem Zustand, in der die Zähne der Klemmfläche des Klemmkeils gerade an dem Gurtband eingreifen,
- Fig. 3: eine perspektivische Darstellung des Klemmkeils und des mit diesem verbundenen Steuerhebels,
- Fig. 4: einen Längsschnitt durch eine zweite Ausführungsform der erfindungsgemäßen Klemmvorrichtung,
- Fig. 5: einen Längsschnitt durch eine dritte Ausführungsform der erfindungsgemäßen Gurtbandklemmvorrichtung, bei der der den Klemmkeil in seine Klemmstellung bewegende Steuerhebel in seiner Betätigung eine Steuerkante aufweist.
- Fig. 6: eine Seitenansicht einer vierten Ausführungsform der erfindungsgemäßen Gurtbandklemmvorrichtung, bei der der Klemmkeil von einem mit einer Kulissenkurve versehenen Winkelhebel in seine Klemmstellung bewegbar ist,
- Fig. 7: eine perspektivische Ansicht der durch eine Querstrebe mit verlängerter Gurtbandführung verbundenen Hebel des Stellgliedes mit mit diesem schwenkbar verbundenen Klemmkeil,
- Fig. 8: das Stellglied nach Fig. 7 in schematischer Seitenansicht,
- Fig. 9: eine Seitenansicht einer weiteren Ausführungsform der erfindungsgemäßen Gurtbandklemmvorrichtung,
- Fig. 10: eine Seitenansicht der erfindungsgemäßen Gurtbandklemmvorrichtung mit separatem Vorsteuerhebel in schematischer Darstellung und
- Fig. 11: eine Seitenansicht der erfindungsgemäßen Gurtbandklemmvorrichtung mit am Steuerhebel angespritztem Vorsteuerhebel in schematischer Darstellung.

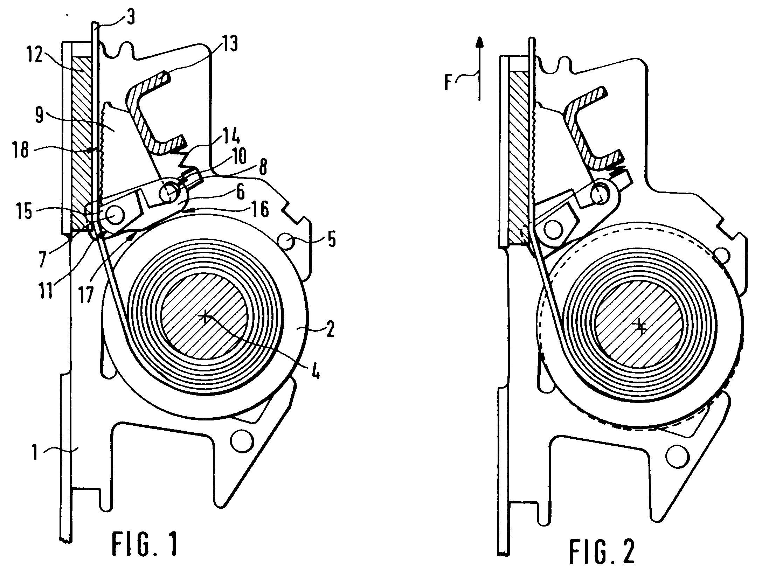

Bei dem Ausführungsbeispiel nach Fig. 1 ist in einem Gehäuse 1 die Wickelwelle 2 mit aufgespultem Gurtband 3 drehbar gelagert. Die Achse 4 der Wickelwelle ist um den Punkt 5 im Gehäuse 1 schwenkbar. Der Steurerhebel 6 ist um die Achse 7 ebenfalls drehbar am Gehäuse gelagert. Über die Achse 8 ist der Steuerhebel 6 gelenkig mit dem Klemmkeil 9 verbunden. Die Achse 8 wird in dem Langloch 10 geführt. Der Steuerhebel 6 ist mit dem Radius 11 versehen, der als Gurtbandführung wirkt und das Gurtband 3 an der Gegendruckwange 12 führt. Der Klemmkeil 9 wird an der U-Schiene 13 geführt und von der Feder 14 in seiner Ruhelage gehalten. Der Anschlag 15 schränkt die Bewegung des Klemmkeils in Richtung Wickelwelle 2 ein, so daß zwischen dieser und dem Steuerhebel 6 ein Spalt 16 bestehen bleibt.

Die Funktionsweise der erfindungsgemäßen Gurtbandklemmvorrichtung wird wie folgt beschrieben:

Durch in der Zeichnung nicht dargestellte Sensoren, die entweder fahrzeugsensitiv und/oder gurtbandsensitiv wirken, wird die S pule 2 blockiert. Wird nun in Richtung des Pfeiles F weiterhin Gurtband abgezogen, so bewegt sich die Achse 4 der Wickelwelle 2 auf einer Kreisbahn um den Punkt 5 am Gehäuse 1. Nach Überwindung des Spaltes 16 berührt die Wickelwelle 2 die Steuerkante 14 des Steuerhebels 6. Bei weiterem Gurtbandabzug gleitet die Steuerkante 17 auf der Wickelwelle 2 und der Steuerhebel 6 wird um die Achse 7 nach oben verschwenkt. Dabei drückt er auch den Klemmkeil 9 entgegen der Kraft der Feder 14 nach oben. Durch die Schiene 13 wird der Klemmkeil so geführt, daß sich seine Klemmfläche 18 parallel und synchron mit dem Gurtband bewegt und sich diesem immer weiter nähert.

In der Fig. 2 ist ein Zustand dargestellt, in dem die Zähne der Klemmfläche 18 gerade in das Gurtband 2 eingreifen. Bei weiterer Krafteinwirkung auf das Gurtband in die Richtung des Pfeiles F wird der Klemmkeil 9 in seine Endstellung gedrückt und der Gurtbandabzug vollkommen blockiert. Die Kraft der Feder 14 ist so auf den Winkel zwischen der Führung 13 und der Gegendruckwange 12 abgestimmt, daß der Keil 9 nach einer Blockierung des Gurtbandauszugs nur dann nicht wieder in seine Ruhestellung zurückgedrückt wird, wenn bei einem Crash die Gurtabzugskraft so groß war, daß mit einer Beschädigung der Klemmvorrichtung oder des Gurtbandes zu rechnen ist. In diesem Fall muß das Sicherheitsgurtsystem ausgetauscht werden.

In Fig. 3 ist das Gelenk, das aus Klemmkeil und Steuerhebel gebildet wird, im Detail dargestellt. Der Steuerhebel 6 besteht aus zwei Seitenteilen 6a und 6b, die jeweils mit einer Steuerkante 17a und 17b versehen sind. Beide Seitenteile sind durch den Anschlag 15, durch den die Achse 7 geführt ist, fest miteinander verbunden. Die Achse 8 sitzt in einer Führung des Klemmkeils 9 und erstreckt sich durch die Langlöcher 10a und 10b in den Seitenteilen 6a und 6b des Steuerhebels.

Fig. 4 zeigt ein weiteres Ausführungsbeispiel der Erfindung. Die Gleitfläche für den Klemmkeil 9 wird hier durch ein Hohlprofil 13′ gebildet. Anstatt der Schraubenfeder 14 in Fig. 1 und 2 wird eine Blattfeder 14′ eingesetzt. Um die Montage zu erleichtern, ist das Langloch 10 als offene Führung 10′ ausgebildet.

Ebenso wie die anhand der Fig. 1 bis 4 beschriebene Gurtbandklemmvorrichtung ist auch die Gurtbandklemmvorrichtung gemäß dem Ausführungsbeispiel nach Fig. 5 mit einem Gurtaufroller kombiniert, der von der in der DE-OS 34 18 378 beschriebenen Art ist, auf die zur näheren Erläuterung des Gurtaufrollers Bezug genommen wird. Der Gurtaufroller 21 ist mit einer um den gehäusefesten Punkt 22 schwenkbar gelagerten Steuerscheibe 23 versehen, mit der die Welle des Spulenkörers nach der Aktivierung eines Beschleunigungssensors durch ein Kupplungsrad gekuppelt wird, so daß die Kupplungsscheibe bei Auszug des Gurtbandes 24 in Richtung des Pfeils 25 verschwenkt wird.

Die Steuerscheibe 23 ist mit einem lappenartigen Fortsatz 26 versehen, die einen Betätigungsstift 27 trägt.

Oberhalb des Gurtaufrollers 21 ist eine gehäusefeste Schrägführung 28 für den Klemmkeil 29 vorgesehen. Die mit einer Verzahnung oder Riffelung versehene Klemmfläche des Klemmkeils 29 bildet mit der Gegendruckwange 30 einen Durchtrittsspalt für das Gurtband 24.

Unterhalb des Klemmkeils 29 ist im Gehäuse um die Achse 31 ein Steuerhebel 32 schwenkbar gelagert. Der Steuerhebel 32 weist an seinem freien Ende ein Langloch 33 auf, in das ein mit dem Klemmkeil 29 verbundener Zapfen 34 greift. Der Klemmkeil 29 ist mit einem Stützteil 35 versehen. Zwischen diesem Stützteil 35 und der Schrägführung 28 ist eine Druckfeder 36 eingespannt, die bei nichtaktivierten Beschleunigungssensoren den Klemmkeil 29 außer Eingriff mit dem Gurtband 24 hält.

Der Steuerhebel 32 ist auf seiner Unterseite mit einer Steuerkante 37 versehen. Diese Steuerkante 37 ist in der dargestellten Weise auf dem Betätigungsstift 27 abgestützt. Die Steuerkante 37 ist derart ausgebildet, daß sich der Klemmkeil 29 in Abzugsrichtung des Gurtbandes 24 mit Gurtbandgeschwindigkeit oder einer anderen auf die Geschwindigkeit des Gurtbandes abgestimmten Geschwindigkeit in seine Klemmstellung bewegt, wenn nach Ansprechen eines Beschleunigungssensors die Welle des Spulenkörpers an die Steuerscheibe 23 angekuppelt und diese durch das abgezogene Gurtband um den Punkt 22 verschwenkt wird.

Bei dem Ausführungsbeispiel nach Fig. 6 ist statt des Steuerhebels 32 ein Winkelhebel 40 vorgesehen, der um die Achse 31 schwenkbar im Gehäuse gelagert ist. Der Arm 41 ist in gleicher Weise wie der Steuerhebel 32 gelenkig mit dem Klemmkeil 29 verbunden. Der Arm 41 weist also ein Langloch 33 auf, in das der mit dem Klemmkeil 29 verbundene Zapfen 34 greift. Der zweite Arm 42 des Winkelhebels 40 ist mit einer fensterartigen Kulisse 43 und einer oberen Steuerkurve 44 versehen. In die Kulisse 43 greift der Betätigungsstift 27′, der auf der Steuerscheibe 23′ befestigt ist, die um den Punkt 22 schwenkbar im Gehäuse gelagert ist.

Wird die Welle des Spulenkörpers in der in der DE-OS 34 18 378 beschriebenen Weise an die Steuerscheibe 23′ angekuppelt, wird diese bei Auszug des Gurtbandes 24 um die Achse 22 verschwenkt. Durch diese Schwenkbewegung erteilt der Betätigungsstift 27 über die Steuerkurve 44 dem Winkelhebel 40 eine Schwenkbewegung derart, daß der Klemmkeil bei seiner Bewegung in seine Klemmstellung mit der Auszugsgeschwindigkeit des Gurtbandes 24 oder einer anderen geeigneten auf die Auszugsgeschwindigkeit des Gurtbandes abgestimmten Geschwindigkeit in Auszugsrichtung verschoben wird.

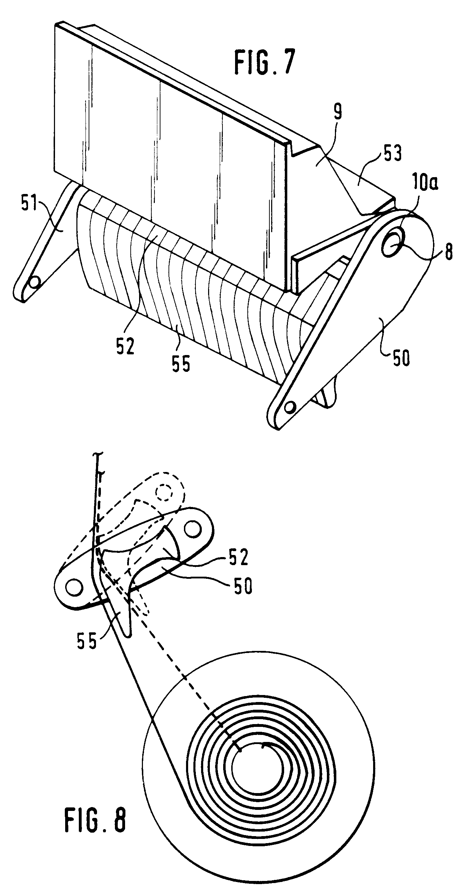

Fig. 7 zeigt die schwenkbar im Gehäuse gelagerten Hebel 50, 51, die jochartig durch die Querstrebe 52 miteinander verbunden sind und gemeinsam das schwenkbar gelagerte Stellglied bilden.

Der Klemmkeil 9 bildet einen Arm eines zweiarmigen Hebels, dessen anderer Arm der Stegteil 53 ist. Auf diesem Stegteil stützt sich in aus Fig. 7 nicht ersichtlicher Weise die Druckfeder 14 ab. Im Bereich der abgewinkelten Arme 9, 53 ist der Klemmkeil auf gegenüberliegenden Seiten mit fluchtenden Achszapfen 8 versehen, die in Langlächer 10a und 10b der Hebel 50, 51 greifen.

Die Querstrebe ist mit einer nach unten hin zungenartig verlängerten Gurtbandführung 55 versehen. Diese Gurtbandführung ist auf ihrer Vorderseite in der dargestellten Weise abgerundet.

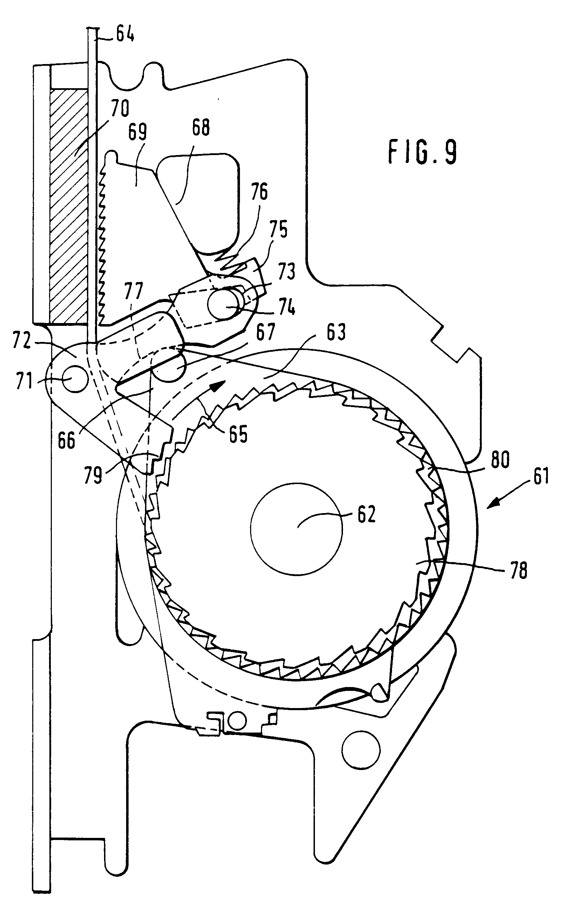

Die Gurtbandklemmvorrichtung nach Fig. 9 ist ebenfalls mit einem Gurtaufroller kombiniert. Der Gurtaufroller 61 ist mit einer um den Lagerpunkt der Welle 62 schwenkbar gelagerten Steuerscheibe 63 versehen, mit der die Welle des Spulenkörpers nach der Aktivierung eines hier nicht dargestellten fahrzeugempfindlichen oder gurtbandempfindlichen Sensors durch ein mit der Welle fest verbundenes Steuerrad 78 gekuppelt wird, so daß die Steuerscheibe 63 bei Auszug des Gurtbandes 64 in Richtung des Pfeiles 65 gedreht wird.

Die Steuerscheibe 63 ist mit einem lappenartigen Fortsatz 66 versehen, der einen Betätigungsstift 67 trägt.

Oberhalb des Gurtaufrollers 61 ist eine gehäusefeste Schrägführung 68 für den Klemmkeil 69 vorgesehen. Die mit einer Verzahnung versehene Klemmfläche des Klemmkeils 69 bildet mit der Gegendruckwange 70 einen Durchtrittsspalt für das Gurtband 64.

Unterhalb des Klemmkeils 69 ist im Gehäuse um die Achse 61 ein Winkelhebel 72 schwenkbar gelagert. Der Winkelhebel 72 weist an seinem einen Ende ein Langloch 73 auf, in das ein mit dem Klemmkeil 69 verbundener Zapfen 74 greift. Der Klemmkeil 69 ist mit einem Stützteil 75 versehen. Zwischen diesem Stützteil 75 und der Schrägführung 68 ist eine Druckfeder 76 eingespannt, die bei nicht aktivierten Beschleunigungssensoren den Klemmkeil 69 außer Eingriff mit dem Gurtband 64 hält.

Der Winkelhebel 72 ist auf seiner Unterseite mit einer Steuerkante 77 versehen, die mit dem Betätigungsstift 67 zusammenwirkt. Das andere Ende des Winkelhebels 72 ist mit einer Verzahnung 79 versehen.

Wird nach Ansprechen eines Sensors die Steuerscheibe 63 mit dem Steuerrad 78 und der Welle gekuppelt, dreht der Betätigungsstift 67 den Winkelhebel 72 um die Achse 71. Der Klemmkeil 69 wird dabei nach oben verschoben. Sobald die Zähne 79 des Winkelhebels 72 in die Verzahnung 80 eines wellenfesten Flansches eingreifen, gibt die Steuerkante 77 des Winkelhebels 72 durch die weitere Drehung der Welle des Spulenkörpers den Betätigungsstift 67 frei. Die Kraft, die benötigt wird, um den Keil 69 in die Klemmstellung einzusteuern, wird nun direkt, ohne Zwischenschaltung der Sensorklinken und des Betätigungsstiftes 67 von der Welle des Spulenkörpers auf den Klemmkeil übertragen.

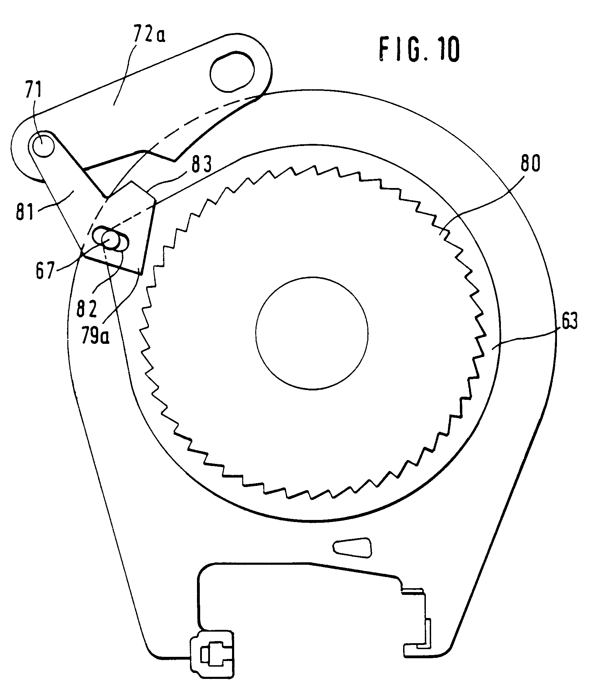

Bei dem Ausführungsbeispiel nach Fig. 10 ist statt des Winkelhebels 72 ein einarmiger Hebel 72a vorgesehen, der ebenfalls um den Punkt 71 verschwenkbar ist. Der Vorsteuerhebel 81 ist ebenfalls um den Punkt 71 verschwenkbar. Wird nun ein Sensor aktiviert und die Steuerscheibe 63 verdreht sich im Uhrzeigersinn, so muß der Betätigungsstift 67 und die Klinke des aktivierten Sensors lediglich die Kraft aufnehmen, die benötigt wird, um den Vorsteuerhebel 81 soweit zu verschwenken, bis sein Zahn 79a in die Verzahnung 80 des wellenfesten Flansches eingreift. In diesem Beispiel ist der Betätigungsstift 67 in einem Langloch 82 des Vorsteuerhebels geführt. Liegt der Vorsteuerhebel 81 mit seiner Kande 83 an dem einarmigen Hebel 72a an, so wird wiederum die Kraft direkt von der Welle über die Verzahnung 80, 79a und die beiden Hebel 81 und 72a zur Einsteuerung des hier nicht dargestellten Klemmkeils übertragen.

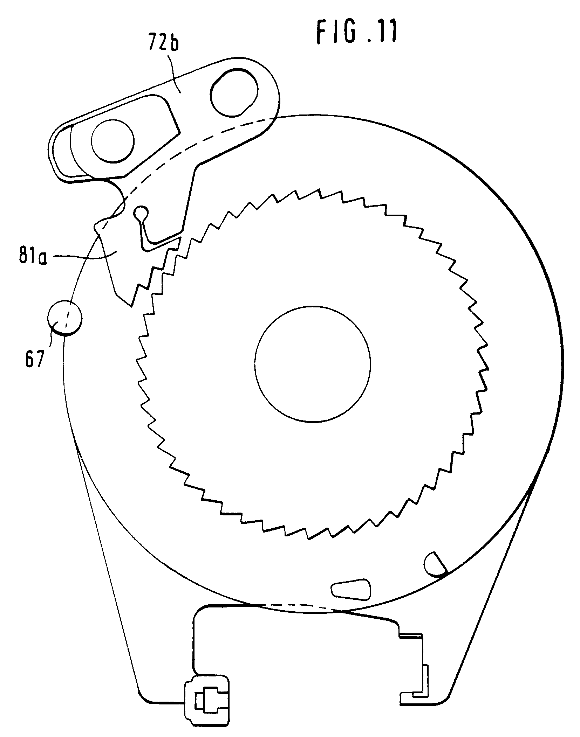

Bei einem Ausführungsbeispiel nach Fig. 11 wird ein Winkelhebel 72b verwendet, der direkt mit einem Vorsteuerhebel 81a verbunden ist. Die Funktion dieses Ausführungsbeispiels ist die gleiche wie bei dem Ausführungsbeispiel nach Fig. 10. Die Vorrichtung läßt sich jedoch wesentlich kostengünstiger herstellen, als eine Vorrichtung nach dem vorigen Ausführungsbeispiel.

## Patentansprüche

1. Gurtbandklemmvorrichtung für ein Sicherheitsgurtsystem mit Gurtaufroller, das mit einer von mindestens einem Beschleunigungssensor gesteuerten Blockiervorrichtung für mit der Welle (2) des Spulenkörpers des Gurtaufrollers verbundene Zahnkränze versehen ist, mit einem Klemmkeil (9), der an einer gehäusefesten Gleitfläche (13) parallel zu einer gehäusefesten Gegendruckwange (12) geführt ist und der mit der Gegendruckwange (12) einen Durchtrittsspalt für das Gurtband (3) begrenzt, und mit einem von der Blockiereinrichtung bewegbaren Stellglied (6; 32; 40; 72; 72a; 72b), das den Klemmkeil (9) in seine Klemmstellung schiebt,
**dadurch gekennzeichnet,**
daß ein Ende des Stellgliedes (6; 32; 40; 72; 72a; 72b) drehbar mit dem Gehäuse (1) und dessen anderes Ende gelenkig mit dem Klemmkeil (9) verbunden ist, daß das Stellglied (6; 32; 40; 72; 72a; 72b) an einer Seite, die der Welle (2) zugerichtet ist, eine Steuerkante (17, 37, 44, 77) bzw. Langlöcher (82) aufweist, die beim Hub der Welle (2) nach einer Blockierung der Zahnkränze bei weiterem Gurtauszug bzw. nach Ankopplung der Welle (2) mit einer Steuerscheibe (23, 23', 63) und nach Rotation dieser Steuerscheibe (23, 23', 63) mit der Welle (2) oder der Steuerscheibe (23, 23', 63) in Eingriff kommt, so daß die Bewegung der Welle (2) bzw. die Rotation der Steuerscheibe (23, 23', 63) in eine translatorische Bewegung des Klemmkeils (9) umgeformt wird, das zwischen dem Klemmkeil (9) und einem gehäusefesten Anschlag (13) ein Federelement (14) vorgesehen ist, daß der Klemmkeil (9) durch einen Arm eines zweiarmigen Hebels gebildet ist, dessen anderer Arm das Federlager für das Federelement (14) darstellt und daß der federbelastete Arm des zweiarmigen Hebels den Klemmkeil (9) in Anlage an die gehäusefeste Gleitfläche (13) hält.

2. Gurtbandklemmvorrichtung nach Anpruch 1, dadurch gekennzeichnet, daß das Stellglied (6) aus zwei im Abstand voneinander angeordneten, mit dem Gehäuse gelenkig verbundenen Hebeln (6a, 6b) besteht, die durch eine einen Anschlag bildende Querstrebe (15) miteinander verbunden sind, und daß der Klemmkeil (9) in seiner Ruhestellung mit der Unterseite auf diesem Anschlag (15) aufliegt, während er sich mit seiner Gleitfläche an der gehäusefesten Gleitfläche (13) abstützt.

3. Gurtbandklemmvorrichtung nach Anspruch 1 oder 2, dadurch gekennzeichnet, daß die Kraftkomponente der Feder (14) die gleiche Richtung wie die gehäusefeste Gleitfläche (13) hat.

4. Gurtbankklemmvorrichtung nach Anspruch 1 oder 2, dadurch gekennzeichnet, daß die Verbindung zwischen Klemmkeil (9) und Stellglied (6) durch Zapfen (8) des Klemmkeils (9) gebildet ist, die in Langlöchern (19) des Stellgliedes (6) greifen, deren Längsmittellinien in einer Ebene liegen, die in der Ruhestellung der Vorrichtung mit der gehäusefesten Gleitfläche (13) einen Winkel von etwa 45 Grad einschließt.

5. Gurtbandklemmvorrichtung nach einem der Ansprüche 1 bis 4, dadurch gekennzeichnet, daß die gelenkige Verbindung zwischen Klemmkeil (18) und Stellglied (6) in einer Ebene liegt, die sich durch die Verlängerung der gehäusefesten Gleitfläche (13) ergibt.

6. Gurtbandklemmvorrichtung nach Anspruch 1 oder 2, dadurch gekennzeichnet, daß der Winkel zwischen der gehäusefesten Gleitfläche (13) und der Gegendruckwange (12) 26 bis 28 Grad beträgt.

7. Gurtbandklemmvorrichtung nach Anspruch 1 oder 2, bei der die Welle nach einer Blockierung der Zahnkränze bei weiterem Gurtauszug eine Hubbewegung ausführt, dadurch gekennzeichnet, daß die Steuerkante (17) so ausgebildet ist, daß während des gesamten Ansteuervorgangs die Geschwindigkeit des Klemmkeils (9) in Gurtbandauszugsrichtung relativ zur Abzugsgeschwindigkeit des Gurtbandes (3), das sich durch den Spalt zwischen Klemmkeil (9) und Gegendruckwange (12) bewegt, eine gewünschte Charakteristik erhält oder konstant gehalten ist.

8. Gurtbandklemmvorrichtung nach einem der vorhergehenden Ansprüche, dadurch gekennzeichnet, daß der durch eine Querstrebe gebildete Anschlag (15) auf seiner der Gegendruckwange (12) zugewandten Seite eine Krümmung mit einem Radius aufweist, dessen Mittelpunkt auch der Mittelpunkt der gelenkigen Verbindung des Stellgliedes (6) mit dem Gehäuse (1) ist, so daß das über die Krümmung laufende Gurtband (2) in jeder Stellung des Stellgliedes (6) etwa in der gleichen Ebene liegt.

9. Gurtbandklemmvorrichtung nach Anspruch 1 oder 2, bei der die Welle durch eine Blockierung der Zahnkränze mit einem Steuerkörper oder einer Steuerscheibe gekuppelt wird und sich bei weiterem Gurtauszug zusammen mit dem Steuerkörper oder der Steuerscheibe weiterdreht, dadurch gekennzeichnet, daß das Stellglied (32) mit einer Steuerkante (37) versehen ist, die so ausgebildet ist, daß ein sich auf der Steuerkante (37) abstützender Betätigungsstift (27), der an dem Steuerkörper oder der Steuerscheibe (23) der Blockiervorrichtung befestigt ist, den Klemmkeil (29) bei der Einsteuerbewegung der Welle mit relativ zur Gurtbandgeschwindigkeit konstanter oder in gewünschter Weise beliebig veränderbarer Geschwindigkeit in seine Klemmstellung schiebt.

10. Gurtbandklemmvorrichtung nach dem Oberbegriff des Anspruchs 9, dadurch gekennzeichnet, daß das Stellglied mindestens einen Winkelhebel (40) aufweist und im Bereich zwischen seinen Armen (41, 42) gehäusefest gelagert ist, daß ein Arm (41) an dem Klemmkeil (29) angreift und der andere Arm (42) mit einer Kulissenführung (44) mit einer Steuerkurve versehen ist, und daß die Hebellängen, der Winkel zwischen den Hebelarmen und die Form der Steuerkurve so ausgebildet sind, daß ein sich auf der Steuerkurve abstützender Betätigungsstift (27), der an dem Steuerkörper oder einer Steuerscheibe der Blockiereinrichtung befestigt ist, den Klemmkeil (29) bei der Einsteuerbewegung mit relativ zur Gurtbandabzugsgeschwindigkeit konstanter oder beliebig veränderbarer Geschwindigkeit in seine Klemmstellung schiebt.

11. Gurtbandklemmvorrichtung nach Anspruch 10, dadurch gekennzeichnet, daß der Betätigungsstift (27) so angeordnet ist, daß die Linie, die er während des Einsteuervorgangs beschreibt, von einer Verbindungsgeraden zwischen Wellenachse und gehäusefester Lagerung (31) des Stellglieds (40) ungefähr halbiert wird.

12. Gurtbandklemmvorrichtung nach Anspruch 9 oder 10, dadurch gekennzeichnet, daß der durch die Querstrebe (52) gebildete Anschlag eine in Richtung der Welle des Spulenkörpers des Gurtaufrollers verlängerte Gurtbandführung (55) aufweist.

13. Gurtbandklemmvorrichtung nach dem Oberbegriff des Anspruchs 9, dadurch gekennzeichnet, daß das Stellglied (72) nach einer Blockierung der Zahnkränze bei weiterem Gurtauszug form- und/oder kraftschlüssig mit der Welle (62) verbunden wird.

14. Gurtbandklemmvorrichtung nach Anspruch 13, dadurch gekennzeichnet, daß das Stellglied einen Winkelhebel (72) aufweist und im Bereich zwischen seinen Armen gehäusefest gelagert ist, daß ein Arm an den Klemmkeil (69) angelenkt ist und der andere Arm mit einer Verzahnung (79) versehen ist, die bei der Einsteuerbewegung in die Verzahnung eines wellenfesten Zahnkranzes (78) eingreift.

15. Gurtbandklemmvorrichtung nach Anspruch 13, dadurch gekennzeichnet, daß ein Vorsteuerhebel (81, 81a) vorgesehen ist, der bei der Einsteuerbewegung in die Verzahnung (80) des wellenfesten Zahnkranzes eingreift und erst dann in Wirkkontakt mit dem Stellglied (72a, 72b) kommt.

16. Gurtbandklemmvorrichtung nach Anspruch 15, dadurch gekennzeichnet, daß der Vorsteuerhebel (81a) und das Stellglied (72b) so miteinander verbunden sind, daß sie durch Materialdeformation relativ zueinander beweglich sind.

17. Gurtbandklemmvorrichtung nach Anspruch 16, dadurch gekennzeichnet, daß der Vorsteuerhebel (81a) und das Stellglied 72b) einstückig ausgebildet sind und vorzugsweise aus Kunststoff bestehen.

## Claims

1. Belt-clamping device for a seat belt system with a belt retractor, which is provided with a blocking device which is controlled by at least one acceleration sensor, and is for toothed rims connected to the shaft (2) of the reel body of tie belt retractor; having a clamping wedge (9), which is guided on a sliding face (13) fixed to the housing parallel to a counter-pressure cheek (12) fixed to the housing and which with the counter-pressure cheek (12) bounds a through-gap for the belt (3); and having a final control element (6; 32; 40; 72; 72a; 72b), which can be moved by the blocking device and pushes the clamping wedge (9) into its clamping position; characterised in that one end of the final control element (6; 32; 40; 72; 72a; 72b) is connected pivotally to the housing (1) and its other end is connected jointedly to the clamping wedge (9); in that the final control element (6; 32; 40; 72; 72a; 72b) has on one side, which is directed towards the shaft (2), a control edge (17, 37, 44, 77) or slots (82) which, when the shaft (2) executes a stroke after a blocking of the toothed rims upon further extraction of the belt or after coupling of the shaft (2) to a disc cam (23, 23', 63) and after rotation of this disc cam (23, 23', 63), comes into engagement with the shaft (2) or the disc cam (23, 23', 63) so that the movement of the shaft (2) or the rotation of the disc cam (23, 23' 63) is converted into a translatory movement of the clamping wedge (9); in that a spring element (14) is provided between the clamping wedge (9) and a stop (13) fixed to the housing; in that the clamping wedge (9) is formed by one arm of a two-armed lever, the other arm of which represents the spring bearing for the spring element (14); and in that the spring-loaded arm of the two-armed lever holds the clamping wedge (9) in contact with the sliding face (13) fixed to the housing.

2. Belt-clamping device according to Claim 1, characterised in that the final control element (6) comprises two levers (6a, 6b) which are arranged at a distance from each other, are jointedly connected to the housing, and are connected to each other by a transverse strut (15) forming a stop; and in that the clamping wedge (9) lies in its position of rest with the underside on this stop (15), whereas it is supported with its sliding face on the sliding face (13) fixed to the housing.

3. Belt-clamping device according to Claim 1 or 2, characterised in that the force component of the spring (14) has the same direction as the sliding face (13) fixed to the housing.

4. Belt-clamping device according to Claim 1 or 2, characterised in that the connection between clamping wedge (9) and final control element (6) is formed by journals (8) of the clamping wedge (9), which engage in slots (19) of the final control element (6), the longitudinal centre lines of which slots lie in a plane which, in the position of rest of the device, forms an angle of about 45 degrees with the sliding face (13) fixed to the housing.

5. Belt-clamping device according to one of Claims 1 to 4, characterised in that the jointed connection between clamping wedge (18) and final control element (6) lies in a plane which is obtained by extending the sliding face (13) fixed to the housing.

6. Belt-clamping device according to Claim 1 or 2, characterised in that the angle between the sliding face (13) fixed to the housing and the counter-pressure cheek (12) is 26 to 28 degrees.

7. Belt-clamping device according to Claim 1 or 2, in which the shaft executes a stroke movement after a blocking of the toothed rims upon further extraction of the belt, characterised in that the control edge (17) is designed in such a way that, during the entire activating operation, the speed of the clamping wedge (9) in the direction of belt extraction maintains a desired characteristic or is kept constant in relation to the drawing-off speed of the belt (3) which moves through the gap between clamping wedge (9) and counter-pressure cheek (12).

8. Belt-clamping device according to one of the preceding claims, characterised in that the stop (15) formed by a transverse strut has on its side facing the counter-pressure cheek (12) a curvature with a radius of which the centre point is also the centre point of the jointed connection of the final control element (6) to the housing (1), so that the belt (2) running over the curvature lies approximately in the same plane in every position of the final control element (6).

9. Belt-clamping device according to Claim 1 or 2, in which the shaft is coupled to a control body or a disc cam by a blocking of the toothed rims and, upon further extraction of the belt, continues to turn together with the control body or the disc cam, characterised in that the final control element (32) is provided with a control edge (37) which is designed in such a way that an actuating pin (27), which is supported on the control edge (37) and is fastened on the control body or the disc cam (23) of the blocking device, pushes the clamping wedge (29) into its clamping position upon the guiding-in movement of the shaft at a speed which is constant in relation to the belt speed or can be changed at will in the desired way.

10. Belt-clamping device according to the preamble of Claim 9, characterised in that the final control element has at least one angle lever (40) and is mounted fixedly on the housing in the region between its arms (41, 42); in that one arm (41) acts on the clamping wedge (29) and the other arm (42) is provided with a connecting link guide (44) with a control cam; and in that the lever lengths, the angle between the lever arms, and the shape of the control cam are designed in such a way that an actuating pin (27) which is supported on the control cam and is fastened on the control body or a disc cam of the blocking device pushes the clamping wedge (29) into its clamping position upon the guiding-in movement at a speed which is constant in relation to the belt extraction speed or can be changed at will.

11. Belt-clamping device according to Claim 10, characterised in that the actuating pin (27) is arranged in such a way that the line which it describes during the guiding-in operation is approximately bisected by a straight connecting line between shaft axis and housing-fixed mounting (31) of the final control element (40).

12. Belt-clamping device according to Claim 9 or 10, characterised in that the stop formed by the transverse strut (52) has a belt guide (55) extended in the direction of the shaft of the reel body of the belt retractor.

13. Belt-clamping device according to the preamble of Claim 9, characterised in that, after a blocking of the toothed rims, upon further extraction of the belt the final control element (72) is connected positively and/or non-positively to the shaft (62).

14. Belt-clamping device according to Claim 13, characterised in that the final control element has an angle lever (72) and is fixedly mounted on the housing in the region between its arms; in that one arm is articulated on the clamping wedge (69) and the other arm is provided with a toothing (79) which, upon the guiding-in movement, engages in the toothing of a toothed rim (78) fixed to the shaft.

15. Belt-clamping device according to Claim 13, characterised in that there is provided a precontrol lever (81, 81a) which, upon the guiding-in movement, engages in the toothing (80) of the toothed rim fixed to the shaft and only then comes into operative contact with the final control element (72a, 72b).

16. Belt-clamping device according to Claim 15, characterised in that the precontrol lever (81a) and the final control element (72b) are connected to each other in such a way that they are movable in relation to each other due to material deformation.

17. Belt-clamping device according to Claim 16, characterised in that the precontrol lever (81a) and the final control element (72b) are designed in one piece and preferably consist of plastic.

## Revendications

1. Dispositif de blocage de sangle pour un système de ceinture de sécurité à enrouleur de sangle, qui est équipé d'un dispositif de blocage commandé par au moins un capteur d'accélération des couronnes dentées reliées à l'arbre (2) du corps de bobine de l'enrouleur de sangle, avec un coin de serrage ou de blocage (9) qui est guidé sur la surface coulissante (13) solidaire du boîtier parallèlement à une joue de contre-pression (12) solidaire du boîtier et qui délimite avec la joue de contre-pression (12) une fente de passage de la ceinture (3) et avec un organe de réglage (6; 32; 40; 72; 72a; 72b) déplaçable par le dispositif de blocage qui pousse le coin de serrage ou de blocage (9) dans sa position de blocage, caractérisé en ce qu'une extrémité de l'organe de réglage (6; 32; 40; 72; 72a; 72b) est reliée à rotation au boîtier (1) et dont l'autre extrémité est reliée par une articulation au coin de blocage (9), en ce que l'organe de réglage (6; 32; 40; 72; 72a; 72b) présente sur un côté qui est orienté vers l'arbre (2), une arête de commande (17, 37, 44, 77) ou des trous oblongs (82) qui viennent en prise lors de la levée ou course de l'arbre (2) après un blocage des couronnes dentées lors d'une sortie ultérieure de sangle ou après l'accouplement de l'arbre (2) à un disque de commande (23, 23', 63) et après une rotation de ce disque de commande (23, 23', 63) avec l'arbre (2) ou le disque de commande (23, 23', 63) de sorte que le déplacement de l'arbre (2) ou la rotation du disque de commande (23, 23', 63) est transformé en un mouvement translatoire du coin de blocage (9), en ce qu'il est prévu entre le coin de blocage (9) et une butée (13) solidaire du boîtier un élément à ressort (14), en ce que le coin de blocage (9) est constitué par un bras d'un levier à deux bras dont l'autre bras constitue le palier à ressort de l'élément à ressort (14), et en ce que le bras chargé par ressort du levier à deux bras maintient le coin de blocage (9) en application contre la surface coulissante (13) solidaire du boîtier.

2. Dispositif de blocage de sangle selon la revendication 1, caractérisé en ce que l'organe de réglage (6) est constitué de deux leviers (6a, 6b) disposés à une certaine distance l'un de l'autre, reliés par une articulation au boîtier, qui sont reliés l'un à l'autre par une entretoise (15) formant butée, et en ce que le coin de blocage (9) repose dans sa position de repos par le côté inférieur sur cette butée (15) tandis qu'il prend appui par sa surface coulissante sur la surface coulissante (13) solidaire du boîtier.

3. Dispositif de blocage de sangle selon la revendication 1 ou 2, caractérisé en ce que la composante de force du ressort (14) a la même direction que la surface coulissante (13) solidaire du boîtier.

4. Dispositif de blocage de sangle selon la revendication 1 ou 2, caractérisé en ce que la liaison entre le coin de blocage (9) et l'organe de serrage (6) est formée par des tourillons (8) du coin de blocage (9) qui rentrent dans les trous oblongs (19) de l'organe de réglage (6) dont les lignes médianes longitudinales se situent dans un plan qui forme, lorsque le dispositif est en position de repos, avec la surface coulissante (13) solidaire du boîtier un angle d'environ 45 degrés.

5. Dispositif de blocage de sangle selon l'une des revendications 1 à 4, caractérisé en ce que la liaison articulée entre le coin de blocage (18) et l'organe de réglage (6) se situe dans un plan qu'on obtient en prolongeant la surface coulissante (13) solidaire du boîtier.

6. Dispositif de blocage de sangle selon la revendication 1 ou 2, caractérisé en ce que l'angle entre la surface coulissante (13) solidaire du boîtier et la joue de contre-pression (12) est de 26 à 28 degrés.

7. Dispositif de blocage de sangle selon la revendication 1 ou 2, dans lequel l'arbre, après un blocage des couronnes dentées lors d'une sortie ultérieure de sangle, effectue un mouvement de levée ou de courses caractérisé en ce que l'arête de commande (17) est réalisée de telle manière que pendant l'ensemble de l'opération de commande, la vitesse du coin de blocage (9) reçoit une caractéristique souhaitée ou est maintenue constante dans la direction d'extraction de sangle relativement à la vitesse de déroulement de la sangle (3) qui se déplace à travers la fente entre le coin de blocage (9) et la joue de contre-pression (12).

8. Dispositif de blocage de sangle selon l'une des revendications précédentes, caractérisé en ce que la butée (15) formée par l'entretoise présente sur son côté orienté vers la joue de contre-pression (12) une courbure d'un rayon dont le centre constitue également le centre de la liaison articulée de l'organe de réglage (6) avec le boîtier (1) de sorte que la sangle (2) passant sur la courbure se situe, dans chaque position de l'organe de réglage (6) à peu près dans le même plan.

9. Dispositif de blocage de sangle selon la revendication 1 ou 2, dans lequel l'arbre, par un blocage des couronnes dentées, est accouplé à un corps de commande ou à un disque de commande et continue à tourner, lors d'une extraction de sangle ultérieure, conjointement avec le corps de commande ou le disque de commande, caractérisé en ce que l'organe de réglage (32) est pourvu d'une arête de commande (37) qui est réalisée de telle sorte qu'un goujon d'actionnement (27) prenant appui sur l'arête de commande (37), et qui est fixé sur le corps de commande ou le disque de commande (23) du dispositif de blocage, pousse le coin de blocage (29) dans sa position de blocage, lors du mouvement de commande de l'arbre à une vitesse constante relativement à la vitesse de sangle ou pouvant être modifiée sélectivement selon ce qui est recherché.

10. Dispositif de blocage de sangle selon le préambule de la revendication 9, caractérisé en ce que l'organe de réglage présente au moins un levier coudé (40) et est monté de façon solidaire au boîtier dans la zone entre ses bras (41,42), en ce qu'un bras (41) vient en prise avec le coin de blocage (29), et en ce que l'autre bras (42) est pourvu d'un guidage à coulisse (44) avec une courbe de commande, et en ce que les longueurs de levier, l'angle entre les bras de levier et la forme de la courbe de commande sont réalisés de telle sorte qu'un goujon d'actionnement (27) prenant appui sur la courbe de commande, qui est fixé sur le corps de commande ou sur un disque de commande du dispositif de blocage, pousse de coin de blocage (29) dans sa position de blocage, lors du mouvement de commande à une vitesse constante relativement à la vitesse de déroulement de sangle ou à une vitesse pouvant être modifiée sélectivement.

11. Dispositif de blocage de sangle selon la revendication 10, caractérisé en ce que le goujon d'actionnement (27) est disposé de telle sorte que la ligne qu'il décrit pendant le mouvement de commande, est à peu près divisée par une droite de liaison entre l'axe de l'arbre et le logement (31) solidaire du boîtier de l'organe de réglage (40).

12. Dispositif de blocage de sangle selon la revendication 9 ou 10, caractérisé en ce que la butée constituée par l'entretoise (52) présente un guidage de sangle (55) prolongé dans la direction de l'arbre du corps de bobine de l'enrouleur de sangle.

13. Dispositif de blocage de sangle selon le préambule de la revendication 9, caractérisé en ce que l'organe de réglage (72), après un blocage des couronnes dentées, lors d'une extraction de sangle ultérieure, est relié par concordance des formes et/ou par mise en oeuvre de forces avec l'arbre (62).

14. Dispositif de blocage de sangle selon la revendication 13, caractérisé en ce que l'organe de réglage présente un levier coudé (72) et est monté de façon solidaire au boîtier dans la zone entre ses bras, en ce qu'un bras est articulé au coin de blocage (69), et en ce que l'autre bras est pourvu d'une denture (79) qui rentre lors du mouvement de commande dans la denture d'une couronne dentée (78) solidaire de l'arbre.

15. Dispositif de blocage de sangle selon la revendication 13, caractérisé en ce qu'il est prévu un levier de commande pilote (81, 81a) qui vient en prise lors du mouvement de commande dans la denture (80) de la couronne dentée solidaire de l'arbre et qui entre seulement ensuite en contact actif avec l'organe de réglage (72a, 72b).

16. Dispositif de blocage de sangle selon la revendication 15, caractérisé en ce que le levier de commande pilote (80a) et l'organe de réglage (72b) sont reliés l'un à l'autre de telle sorte qu'ils peuvent être déplacés relativement l'un vers l'autre par une déformation de matériau.

17. Dispositif de blocage de sangle selon la revendication 16, caractérisé en ce que le levier de commande pilote (81a) et l'organe de réglage (72b) sont réalisés en une pièce et sont de préférence en matière synthétique.
